# FASCICULE DE BREVET EUROPEEN

(11) **EP 3 152 011 B1**
(45) Date de publication et mention de la délivrance du brevet: **25.07.2018**
(21) Numéro de dépôt: 15726150.4
(22) Date de dépôt: 02.06.2015
(51) Int. Cl.: B25J 19/00

(54) **CLÉ POUR ACTIONNER PLUSIEURS MÉCANISMES D'UN ROBOT À CARACTÈRE HUMANOÏDE**
SCHLÜSSEL ZUR BETÄTIGUNG MEHRERER HUMANOIDER ROBOTERMECHANISMEN
KEY FOR ACTUATING A PLURALITY OF HUMANOID ROBOT MECHANISMS

(30) Priorité: 05.06.2014 FR 1455094
(43) Date de publication de la demande: 12.04.2017
(73) Titulaire: Softbank Robotics Europe, 75015 Paris (FR)
(72) Inventeur: TESSIER, Ludovic, F-75015 Paris (FR); FRITSCH, Claude, F-75015 Paris (FR)
(74) Mandataire: Collet, Alain
(86) Numéro de dépôt international: PCT/EP2015/062209
(87) Numéro de publication internationale: WO 2015/185530

(56) Documents cités:
- EP-A1- 0 176 204
- EP-B1- 2 050 544
- CN-A- 102 218 722
- US-A1- 2010 065 999

## Description

L'invention concerne un équipement formé par un robot comprenant plusieurs mécanismes pouvant être actionnés de l'extérieur du robot, et par une clé unique permettant d'actionner chacun des mécanismes du robot. L'invention trouve une utilité particulière pour la maintenance et le transport de robot à caractère humanoïde.

Le document EP 2 050 544 divulgue un robot à caractère humanoïde comprenant une serrure dans laquelle une clé peut être insérée et tournée afin de désactiver ou activer une caméra vidéo embarquée dans le robot.

La robotique humanoïde cherche à rassembler dans une machine le plus grand nombre de caractères s'apparentant à l'être humain. On cherche d'abord à s'approcher de l'humain par l'apparence extérieure, la morphologie ou les mouvements. Le robot humanoïde comprend généralement plusieurs articulations motorisées capables d'entrainer en mouvement, au moyen d'un moteur électrique, un membre par rapport à un autre. Les robots humanoïdes les plus évolués comprennent ainsi des jambes, des bras ou des mains. Ils sont capables de marcher ou de danser à la manière d'un être humain. Ils sont capables de manipuler dans leurs mains des objets de formes variés. On cherche aussi à s'approcher de l'humain par son comportement et son intelligence. L'intelligence artificielle des robots est de plus en plus aboutie, permettant une interaction de plus en plus complexe avec un utilisateur humain.

Les applications possibles des robots humanoïdes sont multiples. On a envisagé des applications dans le domaine industriel, par exemple pour accéder à des zones contaminées présentant un risque pour l'homme. On envisage aussi de nombreuses applications dans le domaine de la santé, par exemple pour l'assistance à des personnes présentant une déficience. On envisage également une utilisation par un plus large public à des fins domestiques.

L'hypothèse d'un déploiement à grande échelle et destiné au plus large public génère des contraintes nouvelles, par exemple industrielles, réglementaires ou de sûreté. La conception des générations les plus récentes de robots intègre d'ores et déjà un ensemble de contraintes pour répondre à des réglementations émergentes. Par exemple, le robot destiné au grand public ne doit présenter aucun risque de sécurité, tant dans le cas d'un fonctionnement normal que dans le cas d'une défaillance. Des opérations de maintenance doivent pouvoir être réalisées, par un opérateur expérimenté ou par un simple utilisateur. On cherche à prendre en compte dans la conception du robot des contraintes liées à l'après-vente, par exemple pour permettre un diagnostique aisé et une réparabilité simple et rapide. Le robot doit aussi pouvoir être transporté, par exemple de son lieu de production à son lieu d'exploitation, en supportant des contraintes mécaniques ou vibratoires sans risque d'endommagement.

A cet effet, l'invention a pour objet un équipement comprenant une clé et un robot à caractère humanoïde comprenant plusieurs mécanismes actionnables de l'extérieur du robot, caractérisé en ce que chacun des mécanismes comprend une interface de connexion dans laquelle peut être insérée la clé, l'interface de connexion de chacun des mécanismes étant configurée de sorte que l'insertion de la clé actionne le mécanisme.

Dans une configuration particulière de l'équipement :
- la clé comprend deux doigts longilignes d'axes sensiblement parallèles entre eux, et
- l'interface de connexion de chacun des mécanismes comprend deux orifices tubulaires d'axes sensiblement parallèles entre eux, configurés pour permettre l'insertion simultanée des deux doigts de la clé dans les deux orifices pour actionner le mécanisme,
Les doigts et les orifices sont configurés de manière symétrique de sorte que chaque doigt peut être inséré dans l'un ou l'autre des deux orifices.

Avantageusement, un des mécanismes est une coque extérieure amovible maintenu contre le robot par un clip, l'interface de connexion de la coque étant configurée de sorte que l'insertion des doigts dans les orifices déplace un élément déformable du clip, libérant la coque du robot.

Dans une configuration particulière de l'équipement :
- les doigts de la clé comprennent en leur extrémité un biseau,
- le clip comprend un élément déformable latéral et un élément déformable axial, et
- l'interface de connexion de la coque est configurée de sorte que le biseau d'un doigt déplace l'élément déformable latéral puis l'élément déformable axial lors de l'insertion de la clé dans l'interface de connexion.

Avantageusement, un des mécanismes est une articulation motorisée comprenant un frein configuré pour maintenir en position l'articulation par effet ressort, l'interface de connexion de l'articulation étant configurée de sorte que l'insertion d'un doigt dans un orifice tubulaire déplace le frein en s'opposant à l'effet ressort, libérant le maintien en position de l'articulation.

Dans une configuration particulière de l'équipement :
- les doigts de la clé comprennent en leur extrémité un biseau,
- le frein comprend un plan incliné, et
- l'interface de connexion de l'articulation est configurée de sorte que le biseau d'un doigt vient en contact du plan incliné lors de l'insertion de la clé dans l'interface de connexion, de manière à renvoyer l'effort exercé selon un axe d'insertion de la clé parallèle aux axes des orifices vers un axe de déplacement du frein.

Dans une configuration particulière de l'équipement :
- les doigts de la clé comprennent une encoche, et
- l'interface de connexion comprend un ergot configuré pour venir coopérer avec l'encoche d'un doigt lorsque la clé est insérée, de manière à maintenir en position la clé insérée dans l'interface de connexion jusqu'à un seuil d'effort prédéterminé, l'ergot étant déformable de sorte à libérer l'encoche de l'ergot lorsqu'un effort de retrait supérieur au seuil prédéterminé est appliqué à la clé.

Avantageusement, une section transversale des doigts et des orifices est ovoïdale.

Avantageusement, les doigts sont constitués d'un matériau à base d'aluminium.

Avantageusement, la clé comprend une partie centrale reliant les deux doigts munie d'une ouverture destinée à faciliter la préhension de la clé.

Avantageusement, la partie centrale de la clé est constituée d'un matériau à base de silicone.

L'invention sera mieux comprise et d'autres avantages apparaîtront à la lecture de la description détaillée d'un mode de réalisation donné à titre d'exemple sur les figures suivantes.
Les figures 1a et 1b représentent deux exemples de robots humanoïdes comprenant plusieurs mécanismes pouvant être actionnés par une clé selon l'invention,
les figures 2a et 2b représentent un exemple d'articulation motorisée comprenant un frein pouvant être libéré par une clé selon l'invention,
la figure 3 représente selon trois vues un exemple de clé selon l'invention pour un robot humanoïde,
les figures 4a et 4b représentent la clé dans une première mise en oeuvre selon l'invention, permettant de libérer une coque extérieure amovible montée sur une tête d'un robot humanoïde,
la figure 5 représente la clé dans une seconde mise en oeuvre selon l'invention, permettant de libérer le frein d'une articulation motorisée d'un robot humanoïde,
la figure 6 représente la clé dans une troisième mise en oeuvre selon l'invention, permettant de libérer le frein d'une articulation motorisée d'un robot humanoïde.

Par souci de clarté, les mêmes éléments porteront les mêmes repères dans les différentes figures.

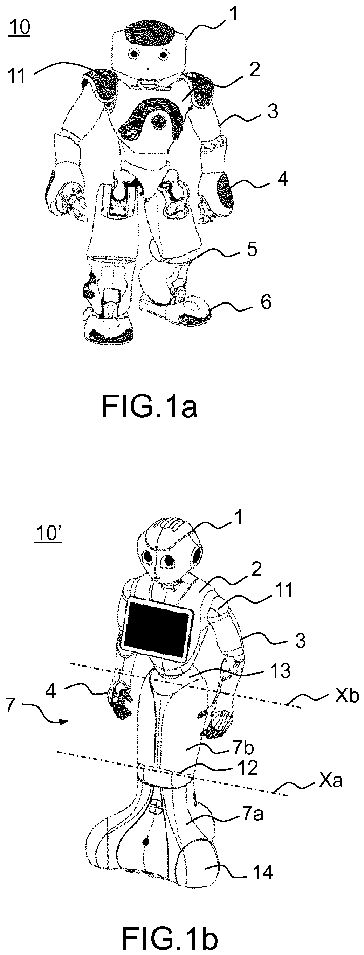

Les **figures 1a et 1b** représentent deux exemples de robots humanoïdes développés par la société ALDEBARAN ROBOTICS™. Le robot humanoïde 10 représenté en figure 1a comprend une tête 1, un torse 2, deux bras 3, deux mains 4, deux jambes 5 et deux pieds 6. Le robot humanoïde 10' représenté en figure 1b comprend une tête 1, un torse 2, deux bras 3, deux mains 4 et une jupe 7. Ces deux robots comprennent plusieurs articulations autorisant le mouvement relatif des différents membres du robot dans le but de reproduire la morphologie humaine et ses mouvements. Les robots 10 et 10' comprennent par exemple une articulation 11 entre le torse 2 et chacun des bras 3. L'articulation 11 est motorisée autour de deux axes de rotation pour permettre de déplacer le bras 3 par rapport au torse 2 à la manière des déplacements possibles par une épaule d'un être humain.

Le robot humanoïde 10 comprend également plusieurs articulations pour mettre en mouvement les jambes du robot et reproduire le mouvement de la marche, en particulier des articulations assimilables à une hanche, entre le torse et la cuisse, à un genou, entre la cuisse et la jambe, et à une cheville entre la jambe et le pied. Plusieurs formes d'articulations motorisées sont mises en oeuvre, entrainant en mouvement l'un des membres autour d'un ou plusieurs degrés de liberté en rotation.

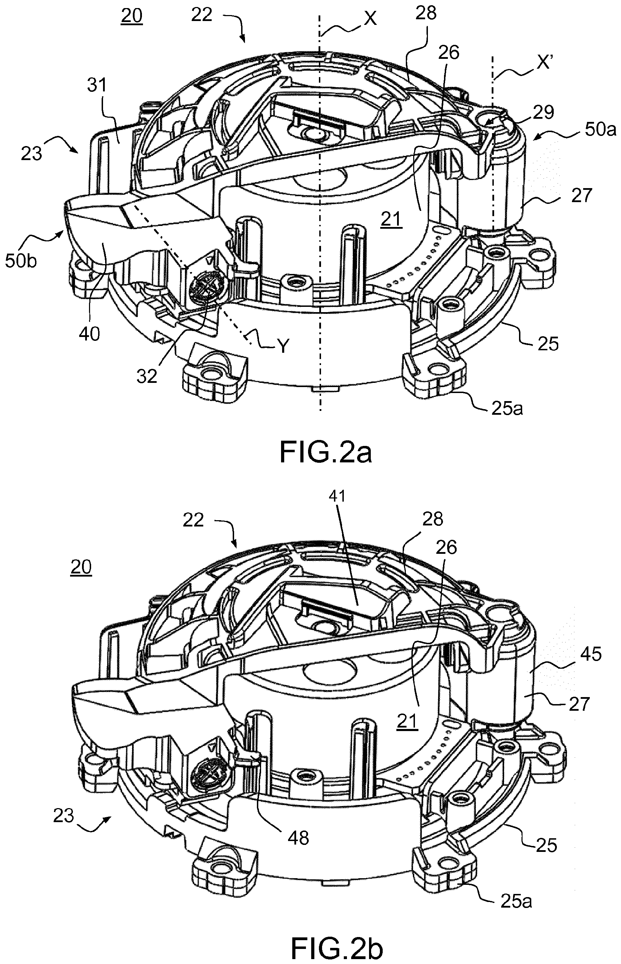

Le robot humanoïde 10' présente une architecture différente. Pour améliorer la stabilité et abaisser le centre de gravité du robot, le robot ne comprend pas de jambe mais une jupe 7 comprenant en sa base un tripode 14 capable de déplacer le robot. La jupe comprend aussi une première articulation 12 s'apparentant à un genou, entre une jambe 7a et une cuisse 7b. Une deuxième articulation 13 s'apparentant à une hanche est montée entre le torse 2 et la cuisse 7b. Ces deux articulations 12 et 13 sont des liaisons pivots motorisées autour d'un axe de rotation. L'axe de rotation Xa de l'articulation 12 et l'axe de rotation Xb de l'articulation 13 sont sensiblement parallèles à un axe reliant les deux épaules du robot, permettant d'incliner le robot vers l'avant ou vers l'arrière. Les figures 2a et 2b décrivent en détail un exemple d'articulation motorisée mis en oeuvre dans le robot humanoïde 10'.

Notons également que le robot humanoïde comprend un certain nombre de pièces extérieures conférant un aspect esthétique au robot. Ces pièces peuvent être fixées à la structure interne de manière définitive ou de manière amovible pour permettre l'accès à divers systèmes et mécanismes du robot. Le robot humanoïde 10' comprend par exemple une coque extérieure amovible en partie arrière de la tête 1 (non visible sur la figure 1b). La coque est maintenue contre la tête et peut être désolidarisée par un dispositif de type clip.

L'idée générale de la présente invention consiste à mettre en oeuvre une clé unique pour actionner plusieurs mécanismes du robot humanoïde. Comme décrit dans la suite, il est par exemple envisagé d'utiliser la clé pour verrouiller ou déverrouiller mécaniquement une articulation du robot, ou encore pour déverrouiller une coque extérieure et libérer un accès à une partie interne du robot. La définition de la clé et des interfaces de connexion des mécanismes actionnés par la clé sont spécifiques de sorte à limiter l'accès aux mécanismes au seul détenteur de la clé.

L'invention est décrite dans la suite pour un robot humanoïde de grande taille semblable au robot humanoïde 10' comprenant une coque extérieure amovible et des articulations motorisées à un degré de liberté de type liaison pivot, pouvant être actionnées au moyen d'une unique clé. Il est bien entendu que l'invention ne se limite pas aux robots humanoïdes ni à ce type de mécanisme actionnable. Plus généralement, l'invention porte sur équipement constitué d'une clé et d'un robot comprenant plusieurs mécanismes actionnables de l'extérieur du robot, munis d'une interface de connexion dans laquelle peut être insérée la clé, et configurée de sorte que l'insertion de la clé actionne le mécanisme. Le robot peut être un robot à caractère humanoïde ou un robot à caractère animal, rassemblés sous la dénomination générale de robot mobile. L'invention est également applicable sur un robot industriel.

Les **figures 2a et 2b** représentent selon un exemple d'articulation motorisée, respectivement dans une position sécurisée et une position opérationnelle. L'articulation 20 est destinée à être montée entre un premier et un second membres non représentés sur les figures. L'articulation 20 comprend :
- un moteur 21 capable d'entrainer en mouvement le second membre par rapport au premier membre, le moteur comprenant une partie fixe destinée à être reliée au premier membre et une partie mobile entrainable en mouvement par rapport à la partie fixe et destinée à être reliée au second membre,
- un frein 22 capable d'exercer un effort sur la partie mobile du moteur 21 par effet ressort, pour empêcher le mouvement de la partie mobile par rapport à la partie fixe,
- un actionneur 23 capable de déplacer le frein 22 en s'opposant à l'effet ressort, de sorte à libérer la partie mobile du moteur 21 de l'effort du frein et permettre au moteur 21 d'entrainer en mouvement la partie mobile par rapport à la partie fixe.

Le moteur 21 est préférentiellement un moteur rotatif électrique, comprenant un socle moteur 25 et un arbre entrainable en rotation par rapport au socle 25 autour d'un axe X. Le socle moteur 25 forme la partie fixe du moteur et comprend une base en forme de disque destinée à être fixée au premier membre du robot au moyen de six pattes de fixation 25a réparties angulairement autour de la base du socle. L'arbre (non visible sur les figures) forme la partie mobile du moteur et est solidaire d'une cloche moteur 26 de forme sensiblement cylindrique. L'arbre traverse le socle moteur et est destinée à être relié au second membre préférentiellement par l'intermédiaire d'un dispositif à engrenages (non représenté). Ainsi configuré, le moteur électrique 21 permet d'entrainer l'arbre en rotation par rapport au socle, entrainant en rotation le second membre par rapport au premier membre.

L'articulation 20 comprend aussi le frein 22. Sur la figure 2a, l'articulation est représentée dans une position sécurisée, dans laquelle le frein exerce un effort sur la partie mobile du moteur pour empêcher l'entrainement en rotation de l'arbre. Sur la figure 2b, l'articulation est représentée dans une position opérationnelle, dans laquelle le frein est déplacé de sorte à libérer le moteur de l'effort de freinage et permettre l'entrainement en rotation de l'arbre. En position sécurisée, le frein 22 exerce un effort sur la cloche moteur 21 préférentiellement constitué d'un matériau métallique, par l'intermédiaire d'un patin préférentiellement constitué d'un matériau élastomère, venant en contact de la cloche cylindrique le long d'une section radiale de celle-ci. Le patin exerce un effort sur la cloche moteur de sorte à empêcher par friction la rotation de l'arbre par rapport au socle.

Dans l'exemple représenté, le frein 22 comprend un bras fixe 27 solidaire du socle moteur 25 et un bras mobile 28. Le bras mobile 28 présente une forme en demi-lune entre une première extrémité 50a et une seconde extrémité 50b, formant un demi-couvercle recouvrant partiellement la cloche moteur. Le bras mobile 28 est relié par la première extrémité 50a au bras fixe 27 au moyen d'une liaison pivot 29 d'axe X' sensiblement parallèle à l'axe X de rotation de l'arbre. Le patin est fixé sur une surface interne du bras mobile, de sorte à venir en contact de la surface radiale de la cloche 26, lors d'une rotation du bras mobile autour de son axe X'. Le patin est fixé sensiblement à égale distance de la première et de la seconde extrémités 50a et 50b du bras mobile 28. Le frein 22 comprend aussi un mécanisme à ressort, préférentiellement un ressort hélicoïdal 45 enroulé autour de l'axe X' et prenant appui sur le bras fixe 27 et sur le bras mobile 28 de manière à exercer un effort tendant à écarter le bras mobile et le bras fixe. L'effort exercé par le ressort entre le bras mobile et le bras fixe, est transmis au patin en contact de la cloche, permettant de bloquer l'arbre en rotation. Par défaut, l'articulation est bloquée en rotation.

L'articulation comprend également un actionneur 23 capable de déplacer le frein en s'opposant à l'effet ressort, de sorte à libérer le moteur de l'effort du frein et permettre au moteur d'entrainer l'arbre en rotation. Dans l'exemple représenté, un actionneur linéaire (non représenté) est monté entre le bras fixe 27 et la seconde extrémité 50b du bras mobile 28. L'actionneur linéaire comprend une tige mobile en translation entre deux positions selon un axe Y, à l'intérieur d'un fourreau. Le fourreau est fixé sur un support 31 solidaire du bras fixe 27. La tige présente en son extrémité une forme sphérique coopérant avec une empreinte sphérique 32 aménagée dans le bras mobile 28. La course de la tige entre ses deux positions définie le débattement du bras mobile entre la position sécurisée et la position opérationnelle. Par défaut, par exemple lorsque l'articulation n'est pas alimentée électriquement, la tige est maintenue par l'effet du ressort dans sa position la plus étendue. A l'inverse, lorsque l'articulation est alimentée, l'actionneur peut être commandé pour rétracter la tige dans le fourreau en exerçant une force contrant l'effet ressort. Divers modes de réalisation de l'actionneur linéaire sont envisageables, notamment un actionneur linéaire pilotable par électro-aimant.

L'articulation comprend aussi des moyens pour déplacer manuellement le frein pour libérer le mouvement de rotation des deux membres. En particulier, un plan incliné 40 est aménagé sur le bras mobile, à proximité de sa seconde extrémité 50b, de sorte qu'un outil déplacé parallèlement à l'axe X de rotation de l'arbre, et contre ce plan incliné 40, peut déplacer le bras mobile de la position sécurisée vers la position opérationnelle, en contrant l'effet ressort. Un second plan incliné 41 est aussi aménagé à proximité du centre de la forme en demi-lune du bras mobile. En pratique, l'articulation motorisée représentée sur les figures est intégrée sur le robot, à l'intérieur d'une enveloppe extérieure représentée sur les figures 1a et 1b conférant l'aspect esthétique extérieur du robot.

Notons également que si les figures suivantes détaillent un exemple particulier d'une articulation motorisée autour de deux ou trois degrés de liberté, il est entendu que l'invention s'applique en principe à tout type d'articulations, par exemple une articulation à un, deux ou trois degrés de liberté en rotation, ou encore une articulation à un ou plusieurs degrés de liberté en translation.

Ainsi, l'articulation motorisée 20 est sécurisée en dotant le moteur d'un frein activé par défaut au moyen d'un mécanisme à ressort, et de moyens pour libérer le moteur de l'emprise du frein en contrant l'effort du ressort. Les moyens pour désactiver le mécanisme de frein comprennent des moyens pilotables de manière électronique, c'est le rôle de l'actionneur, et des moyens manuels, c'est le rôle des plans inclinés. Une telle articulation motorisée peut notamment être mise en oeuvre pour les articulations du genou 12 et de la hanche 13 du robot humanoïde 10' décrit sur la figure 1b.

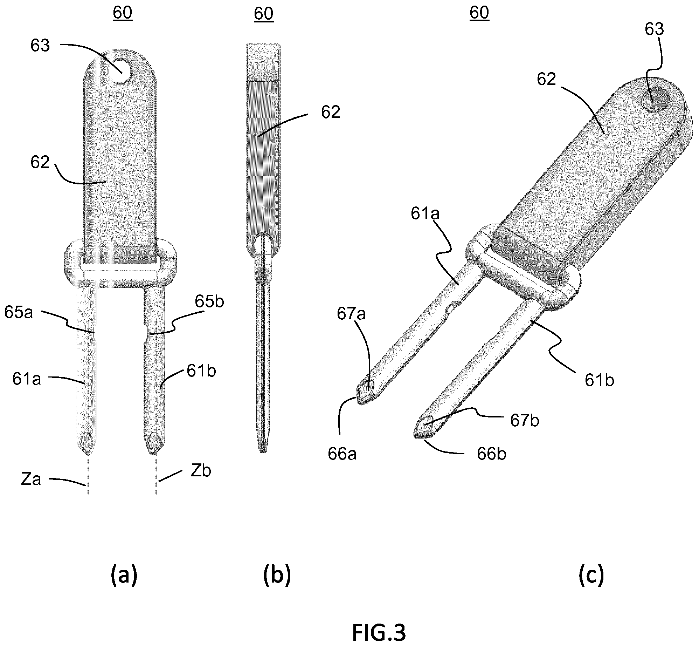

La **figure 3** représente selon trois vues un exemple de clé selon l'invention pour un robot humanoïde. La clé 60 comprend deux doigts longilignes 61a et 61b reliés par une partie centrale 62. Les deux doigts 61a et 61b s'étendent selon deux axes Za et Zb sensiblement parallèles entre eux. La partie centrale 62 comprend une ouverture 63 aménagée en une extrémité opposée à l'extrémité supportant les deux doigts 61a et 61b. L'ouverture 63 est destinée à faciliter la préhension de la clé. Celle-ci pouvant par exemple être reliée par un anneau à un jeu de clé à la façon d'un porte-clés bien connu. Dans une mise en oeuvre privilégiée de l'invention, les doigts 61a et 61b sont constitués d'un matériau à base d'aluminium, et la partie centrale 62 est constituée d'un matériau à base de silicone.

La section transversale des doigts peut être circulaire ou préférentiellement ovoïdale. Les doigts 61a et 61b sont symétriques l'un de l'autre de sorte que la clé peut indépendamment être insérée dans un sens ou dans l'autre. Comme nous allons le détailler sur les figures suivantes, les deux doigts de la clé sont destinés à être insérés dans deux orifices tubulaires des interfaces de connexion pour actionner les mécanismes du robot. Pour cela, l'écartement entre les axes des orifices tubulaires est sensiblement égal à l'écartement entre les axes Za et Zb des doigts 61a et 61. De même, la section transversale des orifices tubulaires est adaptée pour permettre l'insertion de chacun des doigts de la clé. Autrement dit, l'écartement des axes et la section - des doigts et de l'orifice - sont configurés de manière à autoriser l'insertion de la clé, et agissent comme un détrompeur permettant d'empêcher ou au moins de limiter l'accès aux mécanismes. La définition de l'entraxe et de la section est une manière simple et efficace de sécuriser l'accès aux mécanismes. Le choix d'une section ovoïde non circulaire permet notamment d'empêcher un utilisateur d'actionner les mécanismes par un tournevis de conception commune. Avantageusement, les doigts et les orifices sont configurés de manière symétrique de sorte que chaque doigt peut être inséré dans l'un ou l'autre des deux orifices.

Chacun des deux doigts 61a et 61b comprend aussi une encoche, respectivement référencée 65a et 65b, aménagée dans une portion longitudinale supérieure, à proximité de la partie centrale. Les encoches 65a et 65b ont pour but d'assurer le maintien en position de la clé dans l'interface de connexion comme cela est décrit par la suite.

Chacun des doigts 61a et 61b comprend aussi en son extrémité un biseau latéral, respectivement référencé 66a et 66b, et un biseau longitudinal, respectivement référencé 67a et 67b. Nous allons détailler par les figures suivantes les fonctions de ces biseaux.

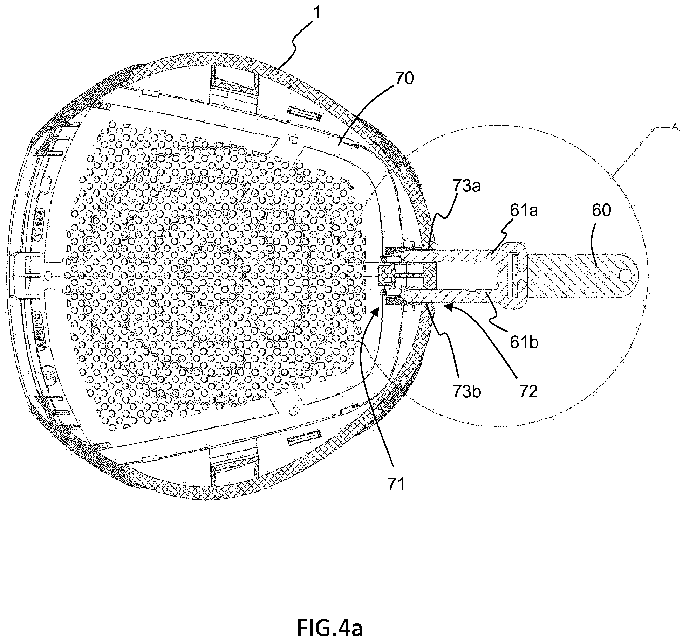

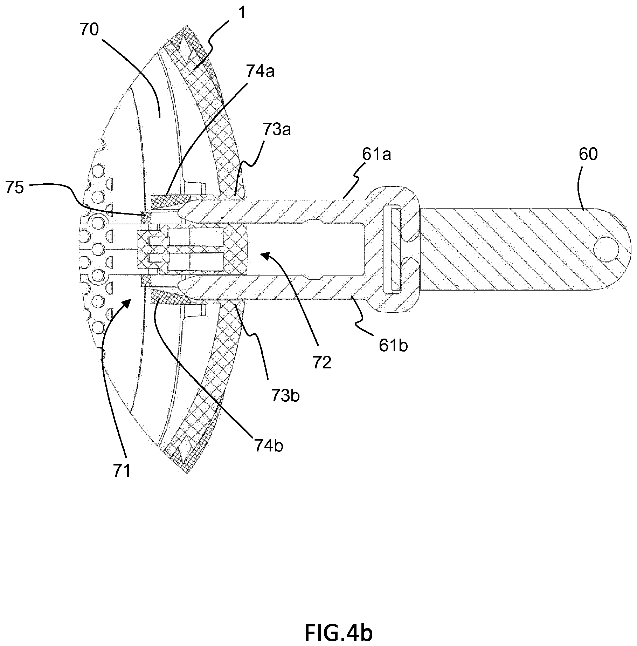

Les **figures 4a** **et** **4b** représentent la clé dans une première mise en oeuvre selon l'invention, permettant de libérer une coque extérieure amovible montée sur une tête d'un robot humanoïde. La tête du robot représentée en coupe sur la figure 4a est semblable à la tête 1 du robot décrit sur la figure 1b. La tête comprend en partie arrière une coque extérieure amovible 70 maintenu contre le robot par des moyens de fixation amovible 71 de type clip. Dans la position clipé, la coque est solidaire de la tête ; dans la position déclipé, la coque libère l'accès à divers dispositifs fonctionnels. La tête du robot comprend aussi une interface de connexion 72 destiné à permettre l'insertion de la clé pour actionner le mécanisme, c'est-à-dire pour décliper la coque et la libérer de la tête du robot. L'interface de connexion 72 comprend deux orifices tubulaires 73a et 73b d'axes sensiblement parallèles entre eux. La section des orifices et l'écartement entre leurs axes sont configurés pour permettre l'insertion simultanée des deux doigts de la clé. Les figures 4a et 4b représente la situation dans laquelle la clé 60 est partiellement insérée dans l'interface de connexion 72.

Dans une mise en oeuvre particulière de l'invention, le clip 71 comprend deux éléments déformables latéraux, respectivement référencés 74a et 74b, positionnés en obstruant au moins partiellement les orifices tubulaires, respectivement 73a et 73b. Le clip comprend aussi un élément déformable axial 75 positionné de manière à obstruer l'extrémité de chacun des deux orifices tubulaires. Lors de l'insertion de la clé de l'interface, les biseaux latéraux 66a et 66b des doigts 61a et 61b viennent en contact des éléments déformables latéraux 72a et 72b, l'effort d'insertion exercé par l'opérateur déplace ces éléments latéraux. Les extrémités des doigts viennent ensuite en contact et déplace l'élément latéral axial 75. Le déplacement par déformation élastique des éléments déformables du clip permet de libérer la coque amovible. Le clip est configuré pour déplacer la coque de quelques millimètres. Une intervention manuelle de l'opérateur permettant ensuite de retirer la coque

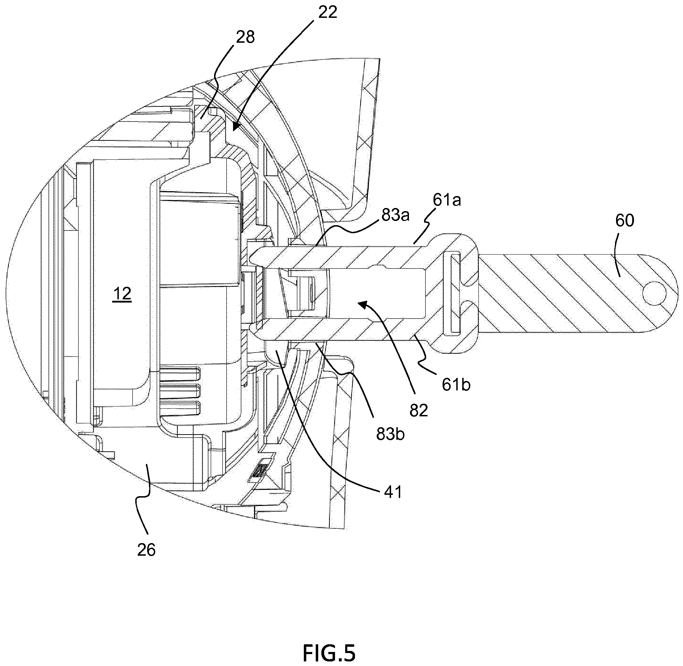

La **figure 5** représente la clé dans une seconde mise en oeuvre selon l'invention, permettant de libérer le frein d'une articulation motorisée d'un robot humanoïde. La figure 5 représente dans une vue en coupe une partie de l'articulation 12 du robot humanoïde 10' décrit sur la figure 1b. L'articulation 12 met en oeuvre une articulation motorisée 20 semblable à celle décrite sur les figures 2a et 2b. L'articulation comprend un frein 22 formé d'un bras fixe et d'un bras mobile 28 exerçant un effort de freinage sur la cloche moteur 26 au moyen d'un mécanisme à ressort entre le bras fixe et le bras mobile. Un plan incliné 41 est aménagé sur le bras mobile 28 comme représenté sur la figure 2b.

L'articulation 12 comprend une interface de connexion 82 destiné à permettre l'insertion de la clé pour libérer l'articulation de l'emprise du frein. Comme précédemment, l'interface de connexion 82 comprend deux orifices tubulaires 83a et 83b configurés pour permettre l'insertion simultanée des deux doigts 61a et 61b de la clé 60. L'interface de connexion 82 est configurée de sorte que le plan incliné 41 vient obstruer au moins partiellement l'un des orifices tubulaires 83a et 83b lorsque l'articulation est en position sécurisée, c'est-à-dire lorsque le frein est en contact de la cloche moteur. Lors de l'insertion de la clé, au moins un des biseaux longitudinaux 67a et 67b des doigts 61a et 61b vient en contact du plan incliné 41. L'effort d'insertion exercé par l'opérateur entraine le déplacement du bras mobile en contrant l'effort de rappel du ressort. La figure 5 représente la situation dans laquelle la clé 60 est insérée dans l'interface de connexion 82, l'articulation étant libérée de l'emprise du frein. Ainsi l'insertion de la clé dans l'interface permet de libérer l'articulation de manière à modifier l'orientation relative des membres. Les membres du robot peuvent être repliés, par exemple en vue d'une phase de transport ou de stockage. Dans cette seconde mise en oeuvre, l'interface de connexion est configurée de sorte que les axes des orifices tubulaires sont sensiblement parallèles à l'axe de rotation de l'articulation. Le plan incliné 41 et les biseaux longitudinaux permettent de renvoyer l'effort d'insertion perpendiculairement à l'axe de rotation de manière à déplacer le bras mobile du frein. Autrement dit, l'interface de connexion de l'articulation est configurée de sorte que le biseau d'un doigt vient en contact du plan incliné lors de l'insertion de la clé dans l'interface, de manière à renvoyer l'effort exercé selon un axe d'insertion de la clé parallèle aux axes des orifices vers un axe de déplacement du frein.

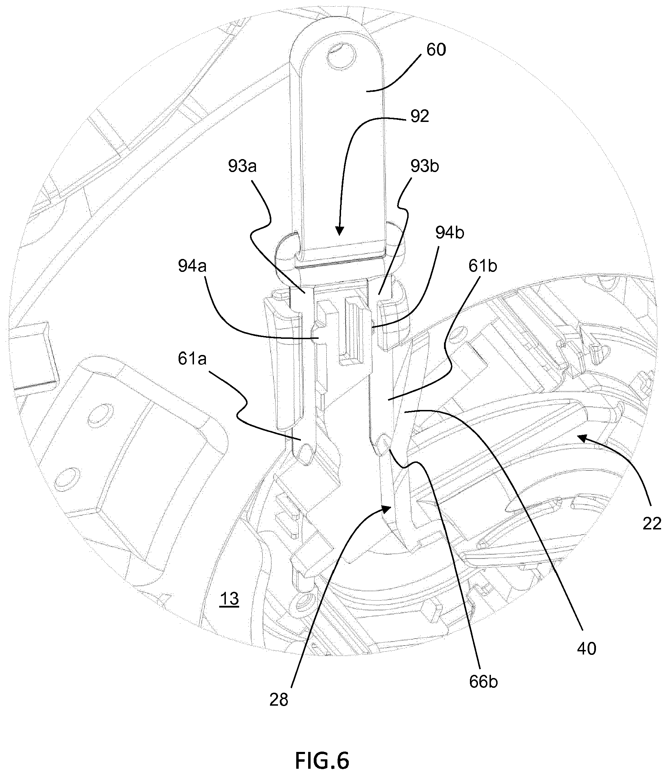

La **figure 6** représente la clé dans une troisième mise en oeuvre selon l'invention, permettant de libérer le frein d'une articulation motorisée d'un robot humanoïde. La figure 6 représente dans une vue en coupe une partie de l'articulation 13 du robot humanoïde 10' décrit sur la figure 1b. L'articulation 13 met en oeuvre une articulation motorisée 20 semblable à celle décrite sur les figures 2a et 2b. Comme précédemment, l'articulation comprend un frein 22 formé d'un bras fixe et d'un bras mobile 28 exerçant un effort de freinage sur la cloche moteur 26 au moyen d'un mécanisme à ressort entre le bras fixe et le bras mobile. Un plan 40 est aménagé sur le bras mobile 28 à proximité de son extrémité 50b comme représenté sur la figure 2b.

L'articulation 13 comprend une interface de connexion 92 destiné à permettre l'insertion de la clé pour libérer l'articulation de l'emprise du frein. L'interface de connexion 92 comprend deux orifices tubulaires 93a et 93b dont l'entraxe et la section sont configurés pour permettre l'insertion simultanée des deux doigts 61a et 61b de la clé 60. L'interface de connexion 92 est configurée de sorte que le plan 40 de frein vient obstruer au moins partiellement l'un des orifices tubulaires 93a et 93b lorsque l'articulation est en position sécurisée, c'est-à-dire lorsque le frein est en contact de la cloche moteur. Lors de l'insertion de la clé, le biseau latéral 66b du doigt 61b vient en contact du plan incliné 40. L'effort d'insertion exercé par l'opérateur entraine le déplacement du bras mobile 28 en contrant l'effort de rappel du ressort. La figure 5 représente la situation dans laquelle la clé 60 est insérée dans l'interface de connexion 92, l'articulation étant libérée de l'emprise du frein. Comme précédemment, l'insertion de la clé dans l'interface permet de libérer l'articulation de manière à modifier l'orientation relative des membres.

Dans cette troisième mise en oeuvre, l'interface de connexion 92 comprend également deux ergots 94aet 94b obstruant partiellement les orifices tubulaires 93a et 93b, et configurés de manière à venir à coopérer avec les encoches 65a et 65b des doigts 61a et 61b. Ainsi, l'insertion de la clé dans l'interface de connexion 92 repousse les ergots par déformation élastique. Les biseaux latéraux 66a et 66b des doigts permettent avantageusement de faciliter l'insertion des doigts et le déplacement progressif des ergots. Lorsque la clé est entièrement insérée, les ergots s'enclenchent dans les encoches en reprenant leur position, permettant de maintenir la clé en position insérée. Le retrait de la clé nécessite d'exercer un effort plus pour déformer les ergots. Autrement dit, l'interface de connexion est configurée de manière à maintenir en position la clé insérée dans l'interface de connexion jusqu'à un seuil d'effort prédéterminé, l'ergot étant déformable de sorte à libérer l'encoche de l'ergot lorsqu'un effort de retrait supérieur au seuil prédéterminé est appliqué à la clé. Ce seuil peut être déterminé par conception des encoches et des ergots, en particulier par le choix des matériaux et des angles de chanfreins entre ergots et encoches.

Le maintien en position de la clé permet de maintenir l'articulation mobile en rotation sans intervention de l'opérateur. Cette fonctionnalité peut notamment être mise à profit dans une phase de transport du robot. L'articulation étant maintenue libre en rotation, elle peut par exemple supporter des contraintes vibratoires importantes liées au transport.

## Revendications

1. Equipement comprenant une clé (60) et un robot à caractère humanoïde (10') comprenant plusieurs mécanismes (70, 12, 13) actionnables de l'extérieur du robot (10'), **caractérisé en ce que** chacun des mécanismes (70, 12, 13) comprend une interface de connexion (72, 82, 92) dans laquelle peut être insérée la clé (60), l'interface de connexion (72, 82, 92) de chacun des mécanismes (70, 12, 13) étant configurée de sorte que l'insertion de la clé (60) actionne le mécanisme (70, 12, 13).

2. Equipement selon la revendication 1, dans lequel :
• la clé (60) comprend deux doigts longilignes (61a, 61b) d'axes (Za, Zb) sensiblement parallèles entre eux,
• l'interface de connexion (72) de chacun des mécanismes (70) comprend deux orifices tubulaires (73a, 73b) d'axes sensiblement parallèles entre eux, configurés pour permettre l'insertion simultanée des deux doigts (61a, 61b) de la clé (60) dans les deux orifices (73a, 73b) pour actionner le mécanisme (70),
les doigts (61a, 61b) et les orifices (73a, 73b) étant configurés de manière symétrique de sorte que chaque doigt (61a, 61) peut être inséré dans l'un ou l'autre des deux orifices (73a, 73b).

3. Equipement selon la revendication 2, dont un des mécanismes est une coque extérieure amovible (70) maintenu contre le robot (10') par un clip (71), l'interface de connexion (72) de la coque (70) étant configurée de sorte que l'insertion des doigts (61a, 61b) dans les orifices (73a, 73b) déplace un élément déformable (74a, 74b, 75) du clip, libérant la coque (70) du robot (10').

4. Equipement selon la revendication 3, dans lequel :
• les doigts (61a, 61b) de la clé (60) comprennent en leur extrémité un biseau (66a, 66b),
• le clip (70) comprend un élément déformable latéral (74a, 74b) et un élément déformable axial (75), et
• l'interface de connexion (72) de la coque (70) est configurée de sorte que le biseau (66a) d'un doigt (61a) déplace l'élément déformable latéral (74a) puis l'élément déformable axial (75) lors de l'insertion de la clé (60) dans l'interface de connexion (72).

5. Equipement selon l'une des revendications 2 à 4, dont un des mécanismes est une articulation motorisée (12, 13) comprenant un frein (22) configuré pour maintenir en position l'articulation (12, 13) par effet ressort, l'interface de connexion (82, 92) de l'articulation (12, 13) étant configurée de sorte que l'insertion d'un doigt (61b) dans un orifice tubulaire (83b, 93b) déplace le frein (22) en s'opposant à l'effet ressort, libérant le maintien en position de l'articulation (12, 13).

6. Equipement selon la revendication 5, dans lequel :
• les doigts (61a, 61b) de la clé (60) comprennent en leur extrémité un biseau (67a, 67b),
• le frein (22) comprend un plan incliné (41), et
• l'interface de connexion (82) de l'articulation (12) est configurée de sorte que le biseau (67b) d'un doigt (61b) vient en contact du plan incliné (41) lors de l'insertion de la clé (60) dans l'interface de connexion (82), de manière à renvoyer l'effort exercé selon un axe d'insertion de la clé (60) parallèle aux axes des orifices (83a, 83b) vers un axe de déplacement du frein (22).

7. Equipement selon l'une des revendications 2 à 6, dans lequel :
• les doigts (61a, 61b) de la clé (60) comprennent une encoche (65a, 65b), et
• l'interface de connexion (92) comprend un ergot (94a, 94b) configuré pour venir coopérer avec l'encoche (65a, 65b) d'un doigt (61a, 61b) lorsque la clé (60) est insérée, de manière à maintenir en position la clé (60) insérée dans l'interface de connexion (92) jusqu'à un seuil d'effort prédéterminé, l'ergot (94a, 94b) étant déformable de sorte à libérer l'encoche (65a, 65b) de l'ergot (94a, 94b) lorsqu'un effort de retrait supérieur au seuil prédéterminé est appliqué à la clé (60).

8. Equipement selon l'une des revendications précédentes, dont une section transversale des doigts (61a, 61b) et des orifices (73a, 73b) est ovoïdale.

9. Equipement selon l'une des revendications précédentes, dont les doigts (61a, 61b) sont constitués d'un matériau à base d'aluminium.

10. Equipement selon l'une des revendications précédentes, dont la clé (60) comprend une partie centrale (62) reliant les deux doigts (61a, 61b) munie d'une ouverture (63) destinée à faciliter la préhension de la clé (60).

11. Equipement selon la revendication 10, dont la partie centrale (62) de la clé (60) est constituée d'un matériau à base de silicone.

## Patentansprüche

1. Ausrüstung, beinhaltend einen Schlüssel (60) und einen humanoiden Roboter (10'), beinhaltend mehrere Mechanismen (70, 12, 13), welche von außerhalb des Roboters (10') betätigt werden können, **dadurch gekennzeichnet, dass** jeder der Mechanismen (70, 12, 13) eine Anschlussschnittstelle (72, 82, 92) beinhaltet, in welche der Schlüssel (60) eingesteckt werden kann, wobei die Anschlussschnittstelle (72, 82, 92) eines jeden der Mechanismen (70, 12, 13) so konfiguriert ist, dass das Einstecken des Schlüssels (60) den Mechanismus (70, 12, 13) betätigt.

2. Ausrüstung nach Anspruch 1, bei welcher:
der Schlüssel (60) zwei längliche Finger (61a, 61b) mit Achsen (Za, Zb) beinhaltet, die im Wesentlichen parallel zueinander sind,
die Anschlussschnittstelle (72) eines jeden der Mechanismen (70) zwei rohrförmige Öffnungen (73a, 73b) mit Achsen beinhaltet, die im Wesentlichen parallel zueinander sind, konfiguriert, um das gleichzeitige Einstecken der zwei Finger (61a, 61b) des Schlüssels (60) in die beiden Öffnungen (73a, 73b) zum Betätigen des Mechanismus (70) zu ermöglichen,
wobei die Finger (61a, 61b) und die Öffnungen (73a, 73b) symmetrisch konfiguriert sind, so dass jeder Finger (61a, 61b) in die eine oder die andere der beiden Öffnungen (73a, 73b) eingesteckt werden kann.

3. Ausrüstung nach Anspruch 2, bei welcher einer der Mechanismen eine äußere abnehmbare Schale (70) ist, welche am Roboter (10') mit einem Clip (71) gehalten wird, wobei die Anschlussschnittstelle (72) der Schale (70) so konfiguriert ist, dass das Einstecken der Finger (61a, 61b) in die Öffnungen (73a, 73b) ein verformbares Element (74a, 74b, 75) des Clips verschiebt, wodurch die Schale (70) des Roboters (10') freigegeben wird.

4. Ausrüstung nach Anspruch 3, bei welcher:
die Finger (61a, 61b) des Schlüssels (60) an ihrem Ende eine Fase (66a, 66b) beinhalten,
der Clip (70) ein verformbares seitliches Element (74a, 74b) und ein verformbares axiales Element (75) beinhaltet, und
die Anschlussschnittstelle (72) der Schale (70) so konfiguriert ist, dass die Fase (66a) eines Fingers (61a) das verformbare seitliche Element (74a) und anschließend das axiale seitliche Element (75) beim Einstecken des Schlüssels (60) in die Anschlussschnittstelle (72) verschiebt.

5. Ausrüstung nach einem der Ansprüche 2 bis 4, bei welchem einer der Mechanismen ein motorisiertes Gelenk (12, 13) ist, beinhaltend eine Bremse (22), konfiguriert um das Gelenk (12, 13) durch Federeffekt in Position zu halten, wobei die Anschlussschnittstelle (82, 92) des Gelenks (12, 13) so konfiguriert ist, dass das Einstecken eines Fingers (61b) in eine rohrförmige Öffnung (83b, 93b) die Bremse (22) verschiebt, indem es gegen den Federeffekt wirkt, wobei das Inpositionhalten des Gelenks (12, 13) freigegeben wird.

6. Ausrüstung nach Anspruch 5, bei welcher:
die Finger (61a, 61b) des Schlüssels (60) an ihrem Ende eine Fase (67a, 67b) beinhalten,
die Bremse (22) eine schräge Ebene (41) beinhaltet, und
die Anschlussschnittstelle (82) des Gelenks (12) so konfiguriert ist, dass die Fase (67b) eines Fingers (61b) mit der schrägen Ebene (41) beim Einstecken des Schlüssels (60) in die Anschlussschnittstelle (82) in Kontakt kommt, so dass die entsprechend einer Einsteckachse des Schlüssels (60) parallel zu den Achsen der Öffnungen (83a, 83b) ausgeübte Kraft in Richtung einer Verschiebungsachse der Bremse (22) umgelenkt wird.

7. Ausrüstung nach einem der Ansprüche 2 bis 6, bei welcher:
die Finger (61a, 61b) des Schlüssels (60) eine Kerbe (65a, 65b) beinhalten, und
die Anschlussschnittstelle (92) einen Vorsprung (94a, 94b) beinhaltet, welcher konfiguriert ist, um mit der Kerbe (65a, 65b) eines Fingers (61a, 61b) zusammenzuarbeiten wenn der Schlüssel (60) eingesteckt wird, um den Schlüssel (60) in Position zu halten, welcher in die Anschlussschnittstelle (92) eingesteckt ist, bis zu einer vorbestimmten Kraftgrenze, wobei der Vorsprung (94a, 94b) unverformbar ist, so dass die Kerbe (65a, 65b) vom Vorsprung (94a, 94b) freigegeben wird, wenn eine Rückzugskraft über dem vorbestimmten Grenzwert auf den Schlüssel (60) ausgeübt wird.

8. Ausrüstung nach einem der vorhergehenden Ansprüche, bei welchem ein Querschnitt der Finger (61a, 61b) und der Öffnungen (73a, 73b) ovoidal ist.

9. Ausrüstung nach einem der vorhergehenden Ansprüche, deren Finger (61a, 61b) aus einem Material auf Aluminiumbasis gebildet sind.

10. Ausrüstung nach einem der vorhergehenden Ansprüche, deren Schlüssel (60) einen zentralen Abschnitt beinhaltet (62), welcher die beiden Finger (61a, 61b) verbindet, versehen mit einer Öffnung (63), welche dazu bestimmt ist, das Greifen des Schlüssels (60) zu erleichtern.

11. Ausrüstung nach Anspruch 10, bei welcher der zentrale Abschnitt (62) des Schlüssels (60) aus einem Material auf Silikonbasis gebildet ist.

## Claims

1. An equipment item comprising a key (60) and a humanoid-type robot (10') comprising several mechanisms (70, 12, 13) that can be actuated from outside the robot (10'), **characterized in that** each of the mechanisms (70, 12, 13) comprises a connection interface (72, 82, 92) into which the key (60) can be inserted, the connection interface (72, 82, 92) of each of the mechanisms (70, 12, 13) being configured such that the insertion of the key (60) actuates the mechanism (70, 12, 13).

2. The equipment item as claimed in claim 1, in which:
• the key (60) comprises two slender fingers (61a, 61b) of axes (Za, Zb) substantially parallel to one another,
• the connection interface (72) of each of the mechanisms (70) comprises two tubular orifices (73a, 73b) of axes substantially parallel to one another, configured to allow the simultaneous insertion of the two fingers (61a, 61b) of the key (60) into the two orifices (73a, 73b) to actuate the mechanism (70),
the fingers (61a, 61b) and the orifices (73a, 73b) being configured symmetrically such that each finger (61a, 61) can be inserted into one or other of the two orifices (73a, 73b).

3. The equipment item as claimed in claim 2, of which one of the mechanisms is a removable outer shell (70) held against the robot (10') by a clip (71), the connection interface (72) of the shell (70) being configured such that the insertion of the fingers (61a, 61b) into the orifices (73a, 73b) displaces a deformable element (74a, 74b, 75) of the clip, releasing the shell (70) from the robot (10').

4. The equipment item as claimed in claim 3, in which:
• the fingers (61a, 61b) of the key (60) comprise, at their end, a bevel (66a, 66b),
• the clip (70) comprises a lateral deformable element (74a, 74b) and an axial deformable element (75), and
• the connection interface (72) of the shell (70) is configured such that the bevel (66a) of a finger (61a) displaces the lateral deformable element (74a) then the axial deformable element (75) upon the insertion of the key (60) into the connection interface (72).

5. The equipment item as claimed in one of claims 2 to 4, of which one of the mechanisms is a motorized articulation (12, 13) comprising a brake (22) configured to hold the articulation (12, 13) in position by spring effect, the connection interface (82, 92) of the articulation (12, 13) being configured such that the insertion of a finger (61b) into a tubular orifice (83b, 93b) displaces the brake (22) by opposing the spring effect, releasing the holding of the articulation (12, 13) in position.

6. The equipment item as claimed in claim 5, in which:
• the fingers (61a, 61b) of the key (60) comprise, at their end, a bevel (67a, 67b),
• the brake (22) comprises an inclined plane (41), and
• the connection interface (82) of the articulation (12) is configured such that the bevel (67b) of a finger (61b) comes into contact with the inclined plane (41) upon the insertion of the key (60) into the connection interface (82), so as to return the force inserted along an axis of insertion of the key (60) parallel to the axes of the orifices (83a, 83b) to an axis of displacement of the brake (22).

7. The equipment item as claimed in one of claims 2 to 6, in which:
• the fingers (61a, 61b) of the key (60) comprise a notch (65a, 65b), and
• the connection interface (92) comprises a lug (94a, 94b) configured to cooperate with the notch (65a, 65b) of a finger (61a, 61b) when the key (60) is inserted, so as to hold the key (60) inserted into the connection interface (92) in position up to a predetermined force threshold, the lug (94a, 94b) being deformable so as to release the notch (65a, 65b) from the lug (94a, 94b) when a removal force greater than the predetermined threshold is applied to the key (60).

8. The equipment item as claimed in one of the preceding claims, of which a transverse section of the fingers (61a, 61b) and of the orifices (73a, 73b) is ovoid.

9. The equipment item as claimed in one of the preceding claims, of which the fingers (61a, 61b) consist of an aluminum-based material.

10. The equipment item as claimed in one of the preceding claims, of which the key (60) comprises a central part (62) linking the two fingers (61a, 61b) provided with an opening (63) intended to facilitate the gripping of the key (60).

11. The equipment item as claimed in claim 10, of which the central part (62) of the key (60) consists of a silicone-based material.
